# EUROPÄISCHE PATENTSCHRIFT

(11) **EP 0 558 820 B1**
(45) Veröffentlichungstag und Bekanntmachung des Hinweises auf die Patenterteilung: **05.06.1996**
(21) Anmeldenummer: 92121861.6
(22) Anmeldetag: 23.12.1992
(51) Int. Cl.: B65G 47/26, B65G 17/24

(54) **Staurollengurtförderer**
Accumulating roller belt conveyor
Convoyeur à bande à rouleaux d'accumulation

(30) Priorität: 05.03.1992 DE 4206939
(43) Veröffentlichungstag der Anmeldung: 08.09.1993
(73) Patentinhaber: Stotz, Krämer GmbH Materialflussysteme und Automation, D-70806 Kornwestheim (DE)
(72) Erfinder: Weiss, Detlef, DE-7120 Bietigheim (DE)
(74) Vertreter: Wasmuth, Rolf, Dipl.-Ing.

(56) Entgegenhaltungen:
- EP-A- 0 277 258
- DE-A- 3 934 233
- DE-A- 4 108 613
- DE-U- 9 106 634
- DE-U- 9 110 041

## Beschreibung

Die Erfindung bezieht sich auf einen Staurollengurtförderer der im Oberbegriff des Anspruches 1 angegebenen Gattung.

Aus der DE-A-39 34 233 ist ein Staurollengurtförderer bekannt, bei dem ein Fördergurt mit in bestimmten Abständen angeordneten Staurollen versehen ist. Diese Staurollen befinden sich in Rollenträgern, welche bis seitlich neben den Gurt herunterreichen und mittels quer den Gurt durchsetzenden Schrauben befestigt sind. Die Staurolle befindet sich auf einer Achse, an deren Enden Tragrollen gelagert sind. Eine derartige Befestigung des Rollenträgers am Gurt bedingt eine enorme Gurtdicke, da der Fördergurt oberhalb und unterhalb der Befestigungsschrauben genügend stark sein muß. Die bekannte Anordnung ist auch schwierig zu montieren bzw. demontieren, was insbesondere bei Reparatur- und Wartungsarbeiten nachteilig ist.

Es ist die Aufgabe der vorliegenden Erfindung, einen Staurollengurtförderer der gattungsgemäßen Art zu schaffen, der einfacher im Aufbau ist und einen geringeren Bauraum benötigt.

Diese Aufgabe wird bei einem Staurollengurtförderer der gattungsgemäßen Art durch die kennzeichnenden Merkmale des Anspruches 1 gelöst.

Die wesentlichen Vorteile der Erfindung sind darin zu sehen, daß der Staurollengurtförderer einfach im Aufbau ist und nur geringen Bauraum benötigt und darüberhinaus äußerst günstig für Wartungs- und Reparaturarbeiten ist. Wesentlich ist außerdem, daß die Staurolle auf einfache Weise zusätzlich antreibbar ist, weil das untere Ende durch die Öffnung im Gurt ragt und durch einen einfachen Aktivierungsmechanismus in Bewegung gesetzt werden kann, wobei diese Bewegungsrichtung die gleiche wie die des Gurtförderers ist.

Eine vorteilhafte Weiterbildung des Erfindungsgegenstandes wird darin gesehen, daß die Öffnungen in Längsrichtung des Gurtes symmetrisch ausgebildet sind und mittig zwischen den seitlichen Rändern des Gurtes liegen. Auf diese Weise ist eine gleichmäßige Beanspruchung des Gurtes bzw. des darin befindlichen Gewebes gegeben. Es ist außerdem vorteilhaft, daß die Öffnungen mindestens annähernd die Form eines Rechtecks besitzen und dessen längere Seitenkanten sich parallel zu den seitlichen Rändern des Gurtes erstrecken. Diese Form entspricht der Fläche, die die Rolle in diesem Zylinderabschnitt einnimmt.

Zur Befestigung des Rolltenträgers ist es vorteilhaft, daß in dem Gurt nahe der Öffnung für die Staurolle weitere Öffnungen vorgesehen sind, die zur Aufnahme von Befestigungsmitteln für die Rollenträger dienen. Dabei sollte jeweils eine der weiteren Öffnungen zwischen den Seitenkanten des Rechtecks und den seitlichen Rändern des Gurtes angeordnet sein und diese Öffnungen auf einer Orthogonalen zur Gurtlängsrichtung liegen. Diese Anordnung ermöglicht es, daß der Rollenträger in Gurtlängsrichtung lediglich eine einzige Befestigungsebene besitzt und damit auch günstig über gekrümmte Laufflächen des Gurtes geführt werden kann. Dadurch werden Biegespannungen im Rollenträger vermieden. Zur Befestigung des Rollenträgers am Gurt ist es vorteilhaft, daß durch die weiteren Öffnungen Schrauben ragen, deren Schraubenköpfe auf der Unterseite des Gurtes in diesem versenkt sind und auf den oberen, mit Gewinde versehenen Enden der Schrauben der Rollenträger mittels Muttern aufgeschraubt ist. Durch die Befestigung der Rollenträger auf der Oberseite des Gurtes mit Hilfe von Befestigungsmitteln, die ebenfalls von oben zugänglich sind, ist die einfache Montage und Demontage der Rollenträger möglich, ohne daß der Gurt selbst oder Teile des Staurollengurtförderers demontiert werden müssen. In an sich bekannter Weise wird der Rollenträger mittels Tragrollen in der Führungsbahn gelagert, wobei diese Tragrollen auf Laufschienen abrollen.

Eine besonders servicefreundliche Ausgestaltung des Rollenträgers ergibt sich dadurch, daß der Grundkörper aus wenigstens zwei Teilen besteht und die Teilungsebene mindestens annähernd parallel zur Gurtebene verläuft und das dem Gurt benachbarte Unterteil des Grundkörpers über dessen gesamte Breite reicht. Dadurch ist es möglich, die Achsen der Tragrollen und Staurollen zwischen Unterteil und Deckelteil des Grundkörpers zu lagern, so daß bei Abnahme der Deckelteile die Rollen austauschbar sind. Eine Demontage des Rollenträgers vom Gurt ist dabei nicht notwendig. In diesem Zusammenhang wird es weiterhin als zweckmäßig angesehen, daß in dem Grundkörper nach oben offene Aussparungen vorhanden sind, in denen sich die auf den Schrauben befestigten Muttern befinden.

Damit die Zugkräfte im Gurt ohne größere Beanspruchung des Gewebes aufgenommen werden können, ist es zweckmäßig, daß die Öffnung in Querrrichtung des Gurtes eine maximale Erstreckung aufweist, die geringer als die Hälfte der Gurtbreite ist. Ein weiteres Merkmal im Hinblick auf die Wartungsfreundlichkeit des Staurollengurtförderers besteht darin, daß das Deckelteil mittels von oben zugänglichen Schrauben mit dem Unterteil des Grundkörpers verschraubt ist. Darüberhinaus ist es zweckmäßig, daß die Führungsbahn eine nach oben offene Aussparung aufweist, die einen etwas größeren Querschnitt besitzt als der vollständige Rollenträger in seiner Draufsicht. Dies ermöglicht den Ausbau einzelner Teile des Rollenträgers oder des gesamten Rollenträgers, ohne daß Elemente der Führungsbahn abgenommen werden müssen.

Die Öffnungen im Gurt können auf verschiedene Weise hergestellt werden, beispielsweise durch Ausstanzungen oder durch Schneiden mittels Laserstrahl. Aus Kosten- und Gewichtsgründen ist es vorteilhaft, daß der Grundkörper des Rollenträgers aus glasfaserverstärktem Kunststoff besteht und insbesondere durch Spritzgießen hergestellt ist. Aus Gründen der Geräuschemission wird vorgeschlagen, die Staurolle bzw. die Tragrollen mit einer Kunststoffummantelung zu versehen. Die Tragrollen oder Staurollen können auch vollständig aus Kunststoff bestehen.

Die Erfindung ist nachstehend anhand eines in der Zeichnung dargestellten Ausführungsbeispiels näher erläutert. In der Zeichnung zeigt:
- Fig. 1a und Fig. 1 b: eine Seitenansicht eines Staurollengurtförderers,
- Fig. 2a und Fig. 2b: eine Draufsicht auf einen Staurollengurtförderer gemäß Fig. 1 und 1b,
- Fig. 3: einen Schnitt entlang der Linie III-III in Fig. 1b in vergrößertem Maßstab,
- Fig. 4: einen Ausschnit der Draufsicht auf die Führungsbahnstaurolle,
- Fig. 5: einen Ausschnitt des Fördergurtes,
- Fig. 6: einen Schnitt durch einen Rollenträger mit Staurolle im Bereich eines Aktivierungsmechanismus.

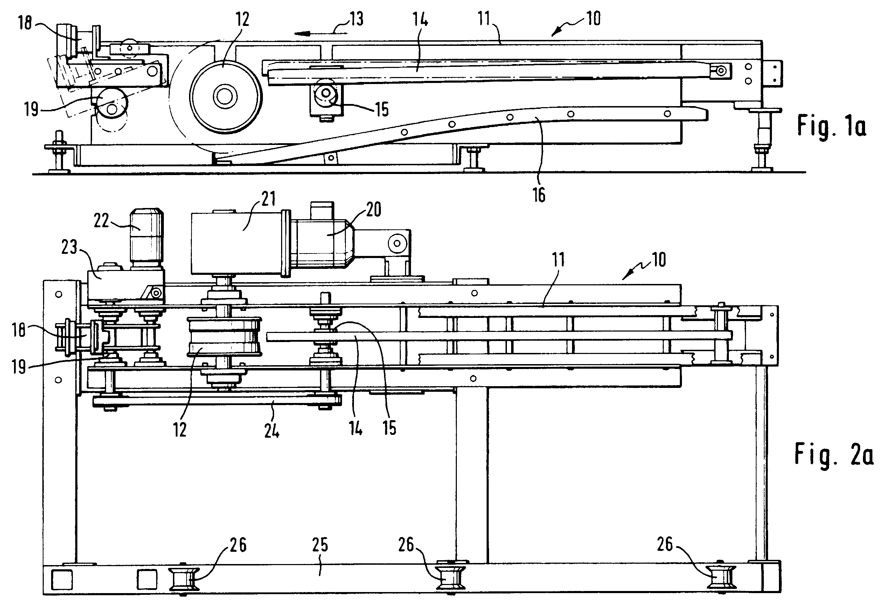

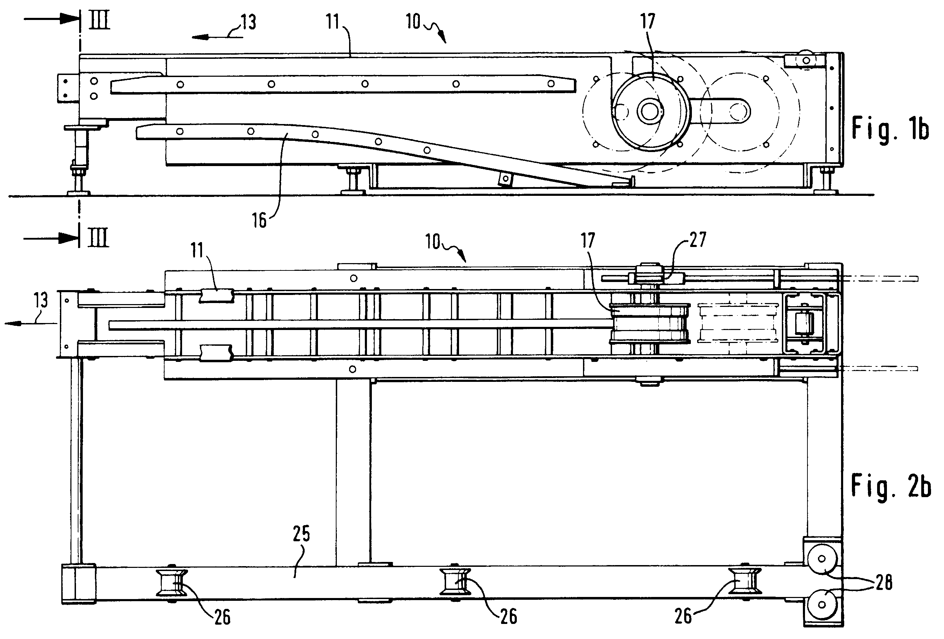

In Fig. 1a ist ein endseitiger Abschnitt eines Staurollengurtförderers 10 dargestellt, bei dem am Ende einer Führungsbahn 11 eine Antriebsrolle 12 für einen Gurt vorgesehen ist. Die Bewegungsrichtung des Gurtes und somit die Transportrichtung für beispielsweise Skids ist mit dem Pfeil 13 angegeben. Unterhalb der Führungsbahn 11 ist in dem Bereich vor der Antriebsrolle 12 ein vertikal begrenzt bewegliches Bauteil 14 beispielsweise in Form einer an der Oberseite eben ausgebildeten Stange angeordnet, die mittels eines Exzenters 15, der mit der Unterseite der Stange in Wechselwirkung steht, anhebbar oder absenkbar ist. Im unteren Bereich des Staurollengurtförderers ist eine Rücklaufschiene 16 angeordnet, auf welcher der mit Staurollen bestückte Gurt von dem antriebsseitigen Ende zu dem in Fig. 1b gezeigten umlenkseitigen Ende des Staurollengurtförderers geführt wird. Wie aus Fig. 1b ersichtlich ist, setzt sich die Rücklaufschiene 16 bis zu einer Umlenkrolle 17 fort, die zum Zwecke des Spannens des Gurtes entsprechend positionierbar ist. Von der Umlenkrolle 17 wird der mit Staurollen bestückte Gurt in der Führungsbahn 11 in Richtung des Pfeiles 13 zu der Antriebsrolle 12 bewegt. Am antriebsseitigen Ende des Staurollengurtförderers ist eine steuerbare Rückhaltevorrichtung 18 vorgesehen, die den weiteren Transportweg für die bereits genannten Skids freigibt. Die Rückhaltevorrichtung 18 wird von einem Exzenter 19 betätigt, der funktionsmäßig mit dem Exzenter 15 gekoppelt ist.

Die Fig. 2a und 2b zeigen die Draufsicht auf den Staurollengurtförderer 10, jedoch ohne montierten Gurt und Staurollen. Am antriebsseitigen Ende in Fig. 2a ist ein Antriebsmotor 20 mit einem Getriebe 21 ersichtlich, dessen Antriebswelle mit der Antriebsrolle 12 gekuppelt ist. Ein weiterer Motor 22 mit einem Getriebe 23 ist zur Betätigung der Exzenter 19 und 15 vorgesehen, wobei die Wellen der Exzenter 15, 19 mittels eines Ketten- oder Riementriebs 24 gekoppelt sind. Parallel zu der Führungsbahn 11 erstreckt sich eine Rollenbahn 25, in der eine Vielzahl von Rollen 26 einzeln gelagert ist. Diese Rollen 26 dienen zur Abstützung der anderen Seite der zu fördernden Gegenstände, d.h. bei zu transportierenden Skids der zweiten Skidkufe. Einen Antrieb benötigen die Rollen 26 daher nicht. In Fig. 2b ist die Umlenkrolle 17 mit einer Justiervorrichtung 27 zu sehen, durch welche die gewünschte Gurtspannung einstellbar ist. Die am umlenkrollenseitigen Ende auf den Staurollengurtförderer 10 auflaufenden Skids sollen möglichst exakt in Förderrichtung ausgerichtet sein. Zu diesem Zweck sind am umlenkrollenseitigen Ende der Rollenbahn 25 zwei Führungsrollen 28 vorgesehen, welche die Kufen oder Skids mittig auf die Rollen 26 ausrichten.

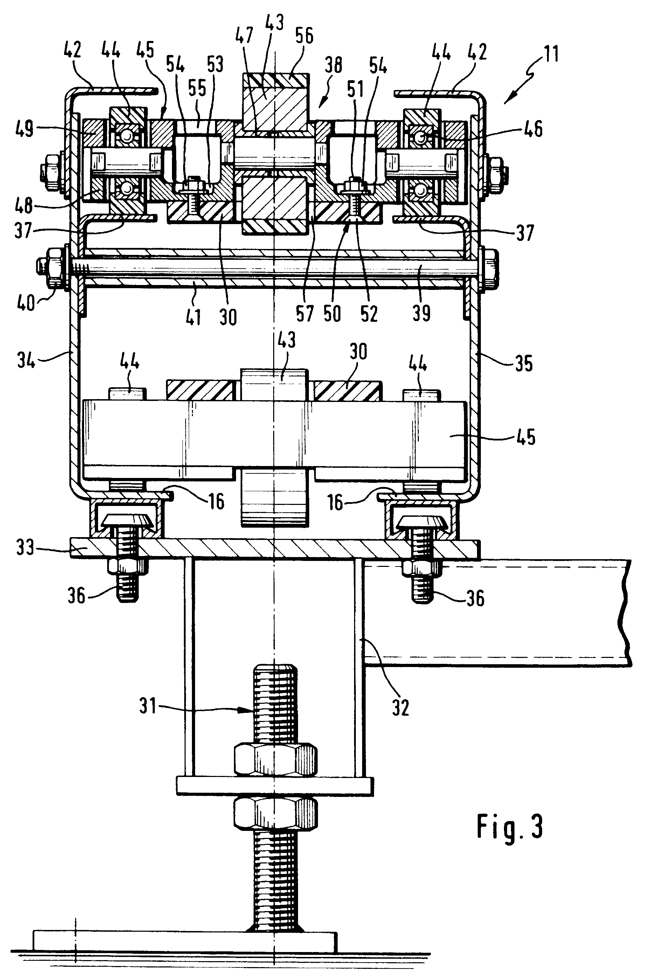

Die Fig. 3 zeigt einen Schnitt durch den Staurollengurtförderer 10 orthogonal zur Förderrichtung bzw. quer zur Längsrichtung des aus einem textilen Gewebe bestehenden Gurtes 30. Auf vertikal einstellbaren Stützen 31 ist ein Tragrahmen 32 gelagert, auf dem eine Befestigungsplatte 33 angeschweißt ist. Auf der Befestigungsplatte 33 sind Winkelbleche 34 und 35 mittels Schrauben 36 befestigt, wobei diese Winkelbleche sich parallel nach oben erstrecken und im wesentlichen die Führungsbahn 11 bilden. Die unteren Abschnitte der Winkelbleche 34 und 35 bilden die Rücklaufschiene 16, die bereits aus Fig. 1 ersichtlich ist.

Im oberen Bereich der Winkelbleche 34 und 35 sind nach innen gerichtete Winkel 37 befestigt, welche als Laufschiene für die am Gurt 30 befestigten Rollenträger 38 dienen. Die Winkel 37 sind mittels über die gesamte Breite der Führungsbahn 11 reichenden Schrauben 39 und Muttern 40 befestigt und als Distanzstücke 41 sind die Schrauben umgebende Hülsen vorgesehen. Durch die Distanzstücke 41 und die Wirkung der Schrauben 39 als Zuganker ist die Breite der Führungsbahn 11 festgelegt und gesichert. Am oberen Ende der Winkelbleche 34, 35 sind - ebenfalls nach innen gerichtete - Deckbleche 42 angeordnet.

Der Rollenträger 38 umfaßt einen Grundkörper 45, in dem in der Mitte die Staurolle 43 und jeweils an den Seiten eine Tragrolle 44 angeordnet ist. Dabei sind die Tragrollen 44 mittels Kugellagern 46 und die Staurolle 43 mittels Gleitlagern 47 zwischen einem Unterteil 48 und einem Deckelteil 49 des Grundkörpers 45 gelagert. Wie aus Fig. 3 ersichtlich, reichen Unterteil 48 und Deckelteil 49 über die gesamte Breite des Rollenträgers 38, so daß lediglich zwei Bauteile für die Halterung der drei darin gelagerten Rollen erforderlich sind. Das Unterteil 48 ist mittels Schrauben 50 am Gurt 30 befestigt, wobei die Schraubenköpfe 52 vollständig im Material des Gurtes 30 versenkt sind und der Gewindeabschnitt 51 der Schrauben 50 in eine Aussparung 53 des Unterteils 48 ragt.

Auf dem Gewindeabschnitt ist eine Mutter 54 aufgeschraubt. Über der Aussparung 53 des Unterteils 48 ist im Deckelteil 49 eine entsprechende Öffnung 55 angeordnet, durch die ein entsprechendes Werkzeug zum Auf- oder Abschrauben der Muttern 54 eingeführt werden kann. Auf diese Weise kann der Rollenträger 38 problemlos vom Gurt entfernt werden, wozu die Deckbleche 42 abzunehmen sind.

Da die Teilungsebene im Grundkörper 45 parallel zur Gurtebene verläuft, ist es auf einfache Weise möglich, defekte Staurollen 43 oder Tragrollen 44 auszutauschen, da lediglich das Deckelteil 49 abgenommen werden muß. Das Unterteil des Grundkörpers 45 verbleibt dabei am Gurt 30. Sofern in den Deckblechen 42 eine entsprechende Aussparung vorgesehen ist, kann der Rollenträger 38 oder Teile davon durch diese Öffnung ohne Demontage der Deckbleche 42 entnommen werden. Die Staurolle 43 ist mit einem Kunststoffmantel 56 versehen. Die Tragrollen 44 bestehen vorzugsweise vollständig aus Kunststoff. Da die Staurolle 43 einen wesentlichen größeren Durchmesser besitzt als die Tragrollen 44, ist eine Öffnung 57 im Gurt 30 vorgesehen, durch die die Staurolle 43 mit ihrem unteren Teil durch den Gurt 30 ragt.

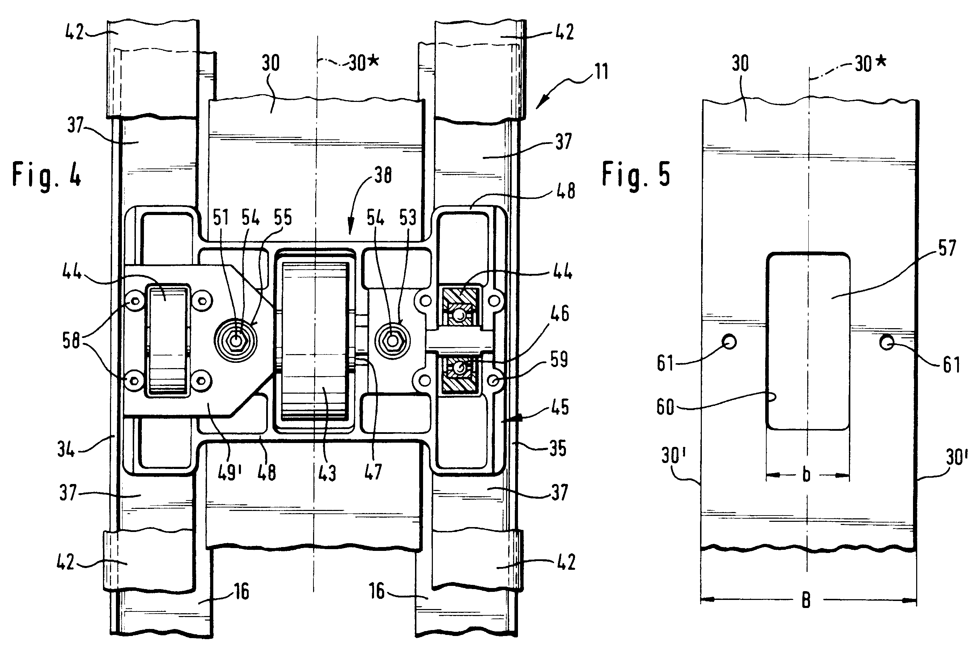

Die Fig. 4 zeigt die Draufsicht auf einen Teil der Führungsbahn 11 bzw. der Winkel 37, die als Laufschiene für den - ebenfalls in der Drausicht gezeigten - Rollenträger 38 dienen. Im linken Teil der Fig. 4 ist der Rollenträger 38 mit dem darauf montierten Deckelteil 49' dargestellt; dagegen ist im rechten Teil der Fig. 4 das Deckelteil abgenommen und die Tragrolle 44 im Schnitt dargestellt. Im Gegensatz zu Fig. 3 umfaßt die Anordnung der Fig. 4 zwei Deckelteile 49', die sich auf jeweils einer Seite der Staurolle 43 zum seitlichen Rand des Rollenträgers 38 erstrecken. Zur Befestigung der Deckelteile 49' auf dem Unterteil 48 des Grundkörpers 45 sind Schrauben 58 vorgesehen, die in entsprechende Bohrungen 59 des Unterteils 48 geschraubt werden. Durch die Öffnung 55 im Deckelteil 49' ist die Mutter 54 zugänglich, ohne daß das Deckelteil abgenommen zu werden braucht. Mit dem Bezugszeichen 30* ist die Längsrichtung des Gurtes 30 bezeichnet. Es ist daher ersichtlich, daß die Tragrolle 38 symmetrisch zur Längsrichtung 30* des Gurtes 30 angeordnet ist.

In Fig. 5 ist ein Ausschnitt des Gurtes 30 mit der darin befindlichen Öffnung 57 gezeigt. Dabei hat die Öffnung die Form eines Rechtecks, dessen längere Seitenkanten 60 parallel zu den seitlichen Rändern 30' des Gurtes 30 verlaufen. Die Öffnung 57 ist mittig im Gurt, d.h. in der Symmetrieachse angeordnet und besitzt eine Breite b, die etwa das 0,4-fache der Breite B des Gurtes 30 beträgt. Zwischen jeder Seitenkante 60 der Öffnung 57 und den seitlichen Rändern 30' ist im Gurt 30 eine Öffnung 61 vorgesehen, die zur Aufnahme der Schrauben 50 zur Befestigung des Rollenträgers 38 am Gurt 30 dienen. Die Öffnungen 61 befinden sich auf einer Orthogonalen zur Gurtlängsachse 30*, wodurch der Rollenträger 38 selbst im Bereich starker Krümmungen des Gurtweges, wie beispielsweise an der Antriebs- und Umlenkrolle, nicht auf Biegung beansprucht wird. Die Öffnungen 57 und 61 können durch Ausstanzen oder Schneiden mittels Laserstrahl hergestellt sein.

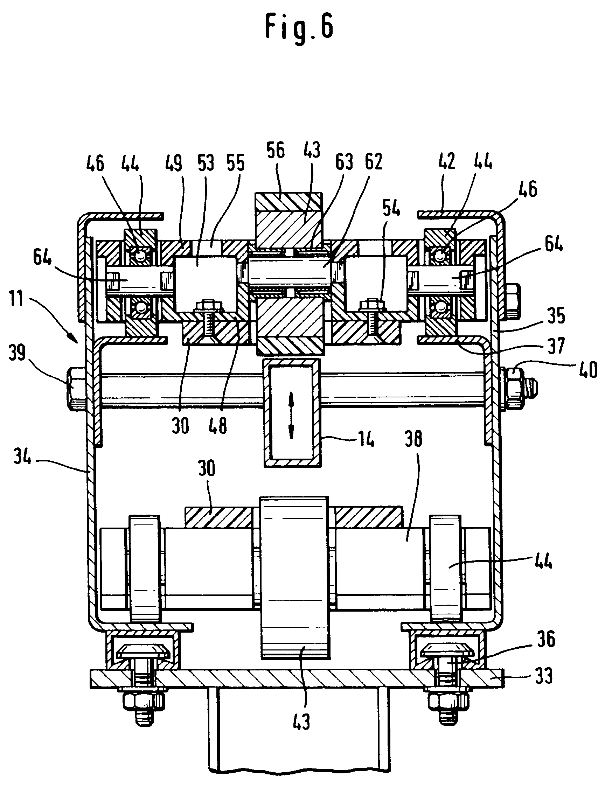

Die Ausführung in Fig. 6 zeigt eine etwas modifizierte Form von Unterteil 48 und Deckelteil 49, wobei die Befestigungsart des Grundkörpers 45 am Gurt 30 der bereits zu Fig. 4 beschriebenen Lösung entspricht. Auf einer zwischen Unterteil 48 und Deckelteil 49 eingespannten Achse 62 sind Nadellager 63 angeordnet, auf denen sich die Tragrolle 43 befindet. Ebenso sind die Achsen 64, welche die Kugellager 46 mit den Tragrollen 44 lagern, zwischen Unterteil 48 und Deckelteil 49 eingespannt. Unterhalb der Staurolle 43 befindet sich im Bereich der Führungsbahn 11 als bewegliches Bauteil 14 ein Vierkantrohr, das einen geringen Abstand zur Staurolle 43 besitzt.

Wie bereits zu Fig. 1 angegeben, ist dieses Bauteil 14 horizontal beweglich und kann somit in Anlage an die Staurolle 43 gebracht werden. Dadurch wird die Staurolle 43 angetrieben, weil sie durch die Bewegung des Gurtes 30 in Richtung des Pfeiles 13 auf dem Bauteil 14 abrollt. Die Umdrehungsgeschwindigkeit der Staurolle addiert sich zur Geschwindigkeit des Gurtes 30, so daß die nahe dem Abtragsende des Staurollengurtförderers befindlichen Skids mit der doppelten Geschwindigkeit vom Staurollengurtförderer fortbewegt werden, wenn die Rückhaltevorrichtung 18 den Transportweg freigibt.

## Patentansprüche

1. Staurollengurtförderer (10) mit einem über eine Antriebs- und eine Umlenkrolle (12, 17) geführten Gurt (30), mit an dem Gurt (30) befestigten Rollenträgern (38) für die Staurollen (43), wobei die Rollenträger (38) in den Förderweg festlegenden Führungsbahnen (11) geleitet werden,
dadurch gekennzeichnet, daß in dem Gurt (30) im Bereich jedes Rollenträgers (38) eine Öffnung (57) vorgesehen ist, die zu jedem der seitlichen Ränder (30') des Gurtes (30) einen Abstand aufweist, der zur Übertragung der Zugkräfte im Gurt (30) ausreicht und die Öffnung (57) so bemessen ist, daß der untere Abschnitt der Staurolle (43) durch die Öffnung (57) ragt.

2. Staurollengurtförderer nach Anspruch 1,
dadurch gekennzeichnet, daß die Öffnungen (57) in Längsrichtung (30*) des Gurtes (30) symmetrisch ausgebildet sind und mittig zwischen den seitlichen Rändern (30') des Gurtes (30) liegen, wobei die Öffnungen (57) vorzugsweise mindestens annähernd die Form eines Rechtecks besitzen, dessen längere Seitenkanten (60) sich parallel zu den seitlichen Rändern (30') des Gurtes (30) erstrecken und insbesondere die Öffnung (57) in Querrichtung des Gurtes (30) eine maximale Erstreckung (Breite b) aufweist, die geringer als die Hälfte der Gurtbreite (B) ist.

3. Staurollengurtförderer nach Anspruch 1 oder 2,
dadurch gekennzeichnet, daß in dem Gurt (30) nahe der Öffnungen (57) für die Staurollen weitere Öffnungen (61) vorgesehen sind, die zur Aufnahme von Befestigungsmitteln (50) für die Rollenträger dienen.

4. Staurollengurtförderer nach Anspruch 2 und 3,
dadurch gekennzeichnet, daß jeweils eine der weiteren Öffnungen (61) zwischen den Seitenkanten (60) des Rechtecks und den seitlichen Rändern (30') des Gurtes (30) angeordnet ist und diese Öffnung (61) auf einer Orthogonalen zur Gurtlängsrichtung (30*) liegt.

5. Staurollengurtförderer nach Anspruch 3 oder 4,
dadurch gekennzeichnet, daß durch die weiteren Öffnungen (61) Schrauben (50) ragen, deren Schraubenköpfe (52) auf der Unterseite des Gurtes (30) in diesem versenkt sind und auf den oberen, mit Gewinde (51) versehenen Enden der Schrauben (50) der Rollenträger (38) mittels Muttern (54) festgeschraubt ist.

6. Staurollengurtförderer nach Anspruch 1,
dadurch gekennzeichnet, daß der Rollenträger (38) einen Grundkörper (45) umfaßt, an dem seitlich mittels Wälzlagern (46) gelagerte Tragrollen (44) angeordnet sind, die auf einer Laufschiene (Winkel 37) der Führungsbahn (11) abrollen.

7. Staurollengurtförderer nach Anspruch 6,
dadurch gekennzeichnet, daß der Grundkörper (45) aus wenigstens zwei Teilen besteht, wobei die Teilungsebene mindestens annähernd parallel zur Gurtebene verläuft und das dem Gurt (30) benachbarte Unterteil (48) des Grundkörpers (45) über dessen gesamte Breite reicht, wobei vorzugsweise die Achsen (64) der Tragrollen (44) und der Staurolle (43) zwischen dem Unterteil (48) des Grundkörpers (45) und einem oder mehreren Deckelteilen (49, 49') gelagert sind.

8. Staurollengurtförderer nach Anspruch 6,
dadurch gekennzeichnet, daß in dem Grundkörper (45) nach oben offene Aussparungen (53) vorgesehen sind, in denen sich die auf den Schrauben (50) befestigten Muttern (54) befinden.

9. Staurollengurtförderer nach Anspruch 7,
dadurch gekennzeichnet, daß das Deckelteil (49) mittels von oben zugänglicher Schrauben (59) mit dem Unterteil (48) des Grundkörpers (45) verschraubt ist, wobei vorzugsweise die Führungsbahn (11) eine nach oben offene Aussparung aufweist, die einen etwas größeren Querschnitt besitzt als der vollständige Rollenträger (38) in seiner Draufsicht.

10. Staurollengurtförderer nach Anspruch 1 bis 4,
dadurch gekennzeichnet, daß die Öffnungen (57, 61) durch Ausstanzungen des Gurtes (30) gebildet sind.

11. Staurollengurtförderer nach Anspruch 1 bis 4,
dadurch gekennzeichnet, daß die Öffnungen (57, 61) im Gurt (30) mittels Laserstrahl herausgeschnitten sind.

12. Staurollengurtförderer nach Anspruch 6 oder 7,
dadurch gekennzeichnet, daß der Grundkörper (45) des Rollenträgers (38) aus glasfaserverstärktem Kunststoff besteht und insbesondere durch Spritzgießen hergestellt ist.

13. Staurollengurtförderer nach Anspruch 1 oder 6,
dadurch gekennzeichnet, daß die Staurolle (43) bzw. die Tragrollen (44) mit einer Kunststoffummantelung versehen sind oder vollständig aus Kunststoff bestehen.

## Claims

1. Accumulating roller-belt conveyer (10) with a belt (30) led over a drive roller and a deflection roller (12, 17), with roller carriers (38) fixed on the belt (30) for the accumulating rollers (43), the roller carriers (38) being guided in the guide tracks (11) which lay down the conveying path,
characterized in that an aperture (57) is provided in the belt (30) in the area of each roller carrier (38), said aperture having a distance to each of the lateral edges (30') of the belt (30) which is adequate to transmit the tensile forces in the belt (30) and the aperture (57) being dimensioned so that the bottom section of the accumulating roller (43) projects through the aperture (57).

2. Accumulating roller-belt conveyor according to Claim 1,
characterized in that the apertures (57) in the lengthwise direction (30*) of the belt (30) are designed symmetrically and lie centrally between the lateral edges (30') of the belt (30), the apertures (57) having preferably at least approximately the shape of a quadrilateral, the longer side edges (60) of which extend parallel to the lateral edges (30') of the belt (30) and especially the aperture (57) in the transverse direction of the belt (30) having a maximum extension (width b) which is less than half the width of the belt (B).

3. Accumulating roller-belt conveyor according to Claim 1 or 2,
characterized in that other apertures (61) are provided in the belt (30) close to the apertures (57) for the accumulating rollers, which are used for holding means of attachment (50) for the roller carriers.

4. Accumulating roller-belt conveyor according to Claims 2 and 3,
characterized in that in each case one of the other apertures (61) is located between the side edges (60) of the quadrilateral and the side edges (30') of the belt (30) and this aperture (61) lies on an orthogonal to the lengthwise direction (30*) of the belt.

5. Accumulating roller-belt conveyor according to Claim 3 or 4,
characterized in that bolts (50) project through the other apertures (61), the bolt heads (52) of which, on the underside of the belt (30), are sunk in the latter and at the top ends of the bolts (50) fitted with threads (51), the roller carrier (38) is screwed tight by means of nuts (54).

6. Accumulating roller-belt conveyor according to Claim 1,
characterized in that the roller carrier (38) includes a basic body (45), on which carrier rollers (44) supported laterally by means of roller bearings (46) are located, which run down on a runner (angle 37) of the guide track (11).

7. Accumulating roller-belt conveyor according to Claim 6,
characterized in that the basic body (45) consists of at least two parts, the dividing plane running at least approximately parallel to the belt plane and the bottom part (48) adjacent to the belt (30) extends over the entire width of it, the axes (64) of the carrier rollers (44) and of the accumulating roller (43), preferably being supported between the bottom part (48) of the basic body (45) and one or more cover parts (49, 49').

8. Accumulating roller-belt conveyor according to Claim 6,
characterized in that recesses (53) opening upwards are provided in the basic body (45), in which the nuts (54) fixed on the bolts (50) are to be found.

9. Accumulating roller-belt conveyor according to Claim 7,
characterized in that the cover part (49) is bolted by means of bolts (59) accessible from above to the bottom part (48) of the basic body (45), the guide track (11) preferably having a recess opening upwards, which has a rather larger cross-section than the complete roller carrier (38) in its plan view.

10. Accumulating roller-belt conveyor according to Claims 1 to 4,
characterized in that the apertures (57, 61) are formed by parts punched out of the belt (30).

11. Accumulating roller-belt conveyor according to Claims 1 to 4,
characterized in that the apertures (57, 61) in the belt (30) are cut out by means of a laser beam.

12. Accumulating roller-belt conveyor according to Claim 6 or 7,
characterized in that the basic body (45) of the roller carrier (38) is made of glass-fibre-reinforced plastics and is produced especially by injection moulding.

13. Accumulating roller-belt conveyor according to Claim 1 or 6,
characterized in that the accumulating roller (43) or the carrier rollers (44) are fitted with a plastic casing or are made completely of plastics.

## Revendications

1. Convoyeur à courroie à rouleaux d'accumulation (10), comportant une courroie (30) guidée par une poulie motrice et par une poulie de renvoi (12, 17), avec des supports de rouleaux (38), fixés sur la courroie (30), pour les rouleaux d'accumulation (43), les supports de rouleaux (38) étant guidés dans des guides (11), qui définissent la trajectoire de transport, caractérisé en ce qu'une ouverture (57) est prévue dans la courroie (30), dans la zone de chaque support de rouleaux (38), cette ouverture présentant, par rapport à chacun des bords latéraux (30') de la courroie (30), une distance suffisante pour la transmission des forces de traction dans la courroie (30), et l'ouverture (57) ayant un dimensionnement tel que la section inférieure du rouleau d'accumulation (43) pénètre au travers de l'ouverture (57).

2. Convoyeur à courroie à rouleaux d'accumulation suivant la revendication 1, caractérisé en ce que les ouvertures (57) sont réalisées symétriques dans le sens longitudinal (30*) de la courroie (30) et se situent au centre entre les bords latéraux (30') de la courroie (30), les ouvertures (57) présentant de préférence, au moins à peu près, la forme d'un rectangle, dont les bords latéraux (60) les plus longs sont parallèles aux bords latéraux (30') de la courroie (30), et l'ouverture (57) présentant en particulier, dans le sens transversal de la courroie (30), une extension maximale (largeur b) inférieure à la moitié de la largeur (B) de la courroie.

3. Convoyeur à courroie à rouleaux d'accumulation suivant l'une des revendications 1 et 2, caractérisé en ce que d'autres ouvertures (61) sont prévues dans la courroie (30) au voisinage des ouvertures (57) prévues pour les rouleaux d'accumulation, ces ouvertures servant à recevoir des moyens de fixation (50) pour les supports de rouleaux.

4. Convoyeur à courroie à rouleaux d'accumulation suivant les revendications 2 et 3, caractérisé en ce que chacune des autres ouvertures (61) est disposée entre les bords latéraux (60) du rectangle et les bords latéraux (30') de la courroie (30), cette ouverture (61) se situant sur une orthogonale par rapport au sens longitudinal (30*) de la courroie.

5. Convoyeur à courroie à rouleaux d'accumulation suivant l'une des revendications 3 et 4, caractérisé en ce que des vis (50) pénètrent au travers des autres ouvertures (61), les têtes (52) de ces vis étant encastrées dans la courroie (30), sur le côté inférieur de cette dernière, et le support de rouleaux (38) étant fixé à l'aide d'écrous (54) sur les extrémités supérieures, munies de filetages (51), des vis (50).

6. Convoyeur à courroie à rouleaux d'accumulation suivant la revendication 1, caractérisé en ce que le support de rouleaux (38) comporte un corps de base (45), sur les côtés duquel sont disposés des rouleaux porteurs (44), logés au moyen d'un palier à roulements (46) et roulant sur un rail (équerre 37) du guide (11).

7. Convoyeur à courroie à rouleaux d'accumulation suivant la revendication 6, caractérisé en ce que le corps de base (45) se compose au moins de deux parties, le plan de partage s'étendant, au moins à peu près, à la parallèle du plan de la courroie, et la partie inférieure (48) du corps de base (45), adjacente à la courroie (30), s'étendant sur toute la largeur de ce dernier, les axes (64) des rouleaux porteurs (44) et du rouleau d'accumulation (43) étant de préférence logés entre la partie inférieure (48) du corps de base (45) et une ou plusieurs parties couvercles (49, 49').

8. Convoyeur à courroie à rouleaux d'accumulation suivant la revendication 6, caractérisé en ce que des évidements (53), ouverts vers le haut, sont prévus dans le corps de base (45), évidements dans lesquels se situent les écrous (54) fixés sur les vis (50).

9. Convoyeur à courroie à rouleaux d'accumulation suivant la revendication 7, caractérisé en ce que la partie couvercle (49) est vissée à la partie inférieure (48) du corps de base (45) au moyen de vis (59), accessibles à partir du haut, le guide (11) présentant de préférence un évidement ouvert vers le haut, doté d'une section transversale légèrement supérieure à celle du support de rouleaux (38) complet, vu du dessus.

10. Convoyeur à courroie à rouleaux d'accumulation suivant l'une des revendications 1 à 4, caractérisé en ce que les ouvertures (57, 61) sont réalisées par poinçonnage de la courroie (30).

11. Convoyeur à courroie à rouleaux d'accumulation suivant l'une des revendications 1 à 4, caractérisé en ce que les ouvertures (57, 61) sont découpées dans la courroie (30) par rayon laser.

12. Convoyeur à courroie à rouleaux d'accumulation suivant l'une des revendications 6 et 7, caractérisé en ce que le corps de base (45) du support de rouleaux (38) se compose de matière plastique renforcée par des fibres de verre, et est réalisé par moulage par injection, en particulier.

13. Convoyeur à courroie à rouleaux d'accumulation suivant l'une des revendications 1 et 6, caractérisé en ce que le rouleau d'accumulation (43) et/ou les rouleaux porteurs (44) sont munis d'une gaine de matière plastique, ou se composent entièrement de matière plastique.
